# FASCICULE DE BREVET EUROPEEN

(11) **EP 2 582 893 B1**
(45) Date de publication et mention de la délivrance du brevet: **12.07.2017**
(21) Numéro de dépôt: 11737996.6
(22) Date de dépôt: 20.06.2011
(51) Int. Cl.: E04B 2/24, C04B 18/24

(54) **PROCEDE DE FABRICATION D'UN EDIFICE A PARTIR DE BRIQUES A EMBOITEMENT A JOINTS SECS**
VERFAHREN FÜR DEN BAU EINES GEBÄUDES ANHAND VON ZIEGELN MIT TROCKENFUGENVERBINDUNG
METHOD FOR CONSTRUCTING A BUILDING USING BRICKS CONNECTED USING DRY JOINTS

(30) Priorité: 18.06.2010 FR 1002585
(43) Date de publication de la demande: 24.04.2013
(73) Titulaire: Vicat, 92095 Paris La Défense (FR)
(72) Inventeur: BAUMER, Damien, F-25620 Malbrans (FR)
(74) Mandataire: Verriest, Philippe
(86) Numéro de dépôt international: PCT/FR2011/051415
(87) Numéro de publication internationale: WO 2011/157972

(56) Documents cités:
- EP-A1- 0 007 630
- WO-A1-2005/093182
- GB-A- 2 060 026
- US-A1- 2007 245 673

## Description

L'invention concerne le domaine de la construction. Plus précisément, elle se rapporte à un procédé de réalisation d'un édifice à partir de briques élémentaires préfabriquées et emboîtables. Le document EP0007630A1 décrit un tel procédé. Selon l'invention, les briques sont réalisées dans un matériau comprenant des fibres végétales (chanvre, paille, lin, etc.) agglomérées au moyen d'un liant (notamment de la terre, de la chaux - aérienne ou hydraulique).

L'utilisation des fibres végétales pour la construction d'édifices, et plus précisément pour la réalisation de murs et de cloisons, est connue de longue date. On peut citer le torchis, composé d'une matrice d'argile (ou plus généralement de terre) agglomérant des fibres végétales (notamment de la paille).

Les fibres de chanvre ont également été exploitées dans la construction. Une technique classique consiste à préparer in situ un béton (couramment bien qu'abusivement appelé « béton » de chanvre) à partir d'un granulat végétal (la chènevotte) et d'un liant (chaux aérienne ou hydraulique), et à remplir une paroi à ossature bois au moyen d'un tel béton.

Le béton de chanvre peut également servir à la réalisation de dalles, d'enduits à caractère isolant ou encore d'isolant *per se,* que l'on coule par exemple dans les rampants d'une toiture avant la pose d'une couverture.

Il existe de nombreuses recettes et applications du béton de chanvre. L'Association Construire en Chanvre a défini précisément le béton de chanvre et formulé des règles professionnelles d'exécution des ouvrages en béton de chanvre. Ces règles ont été éditées dès 2007 par la Société d'édition des bâtiments et travaux publics dans un fascicule intitulé Construire en Chanvre (ISBN 978-2-915162-92-9). Pour une liste extensive d'ouvrages, articles et publications liées à la construction à base de chanvre, cf. la bibliographie publiée sur le site Web de l'Association : *http:llwww.construction-chanvre.asso.fr*/*.*

Si les techniques ordinaires, aujourd'hui proposées par plusieurs sociétés (parmi lesquelles la société BCB qui propose un béton de chanvre sous la marque déposée Tradical), peuvent être jugées satisfaisantes du point de vue des performances mécaniques, acoustiques et thermiques (égales ou supérieures à celles des constructions ordinaires en moellons), elles sont toutefois grevées par une technicité élevée et une mise en oeuvre difficile, qui limitent leur utilisation aux professionnels du bâtiment.

Des techniques ont été proposées pour remédier à ces inconvénients et démocratiser l'utilisation du chanvre dans la construction. L'une d'elles, décrite dans la demande de brevet français FR 2 871 487 au nom de la société Développement Construction Ecologique (voir également l'équivalent américain US 2008/272270), consiste à réaliser un mur à partir de blocs préfabriqués que l'on assemble in situ. Ces blocs sont munis de cheminées verticales dans lesquelles des poteaux en bois sont insérés pour former une ossature. Les cheminées sont ensuite scellés dans les blocs au moyen d'un matériau de remplissage, tel qu'un liant de type lait de chaux.

Il est vrai que l'emploi de blocs préfabriqués permet d'économiser la préparation sur place du béton de chanvre. Toutefois, l'économie réalisée est marginale, car l'insertion puis le scellement des nombreux poteaux dans les cheminées des blocs constituent des opérations longues et fastidieuses, qui nécessitent en outre la préparation in situ d'une grande quantité de liant.

En raison des inconvénients, évoqués ci-dessus, des techniques connues, y compris les plus récentes, la part du béton de chanvre dans la construction ne progresse pas ou progresse peu, la construction traditionnelle en moellons demeurant largement majoritaire sur le marché.

L'invention vise à perfectionner l'utilisation des fibres végétales (notamment du chanvre) dans la construction, en proposant une mise en oeuvre à la fois simple et rapide, susceptible d'égaler, voire de surpasser les techniques ordinaires de constructions (notamment de briques de terre cuite ou de moellons en béton de ciment).

A cet effet, l'invention propose un procédé de construction d'un édifice selon la revendication 1.

Suivant un mode de réalisation, ce procédé comprend la pose combinée de briques de base pleines, munies d'une rainure et d'une languette mutuellement emboîtables, et de briques raidisseurs alvéolées, munies d'une rainure et d'une languette mutuellement emboîtables ainsi que d'un alvéole pour le passage d'un poteau de renfort.

Les opérations suivantes peuvent être prévues :
- réalisation d'un soubassement en mortier ;
- pose d'une série de poteaux dans le soubassement ;
- pose de briques raidisseurs au niveau des poteaux, avec insertions de ceux-ci dans les alvéoles des briques raidisseurs ;
- pose de briques de base entre les briques raidisseurs.

Chaque poteau comprend par exemple une armature métallique noyée dans du béton (de ciment).

On peut en outre prévoir une opération de pose, au niveau d'un poteau et par-dessus une brique raidisseur, d'une brique demi-raidisseur, munie d'une languette pour permettre son emboîtement sur la brique raidisseur et d'un alvéole pour le passage du poteau, et présentant une longueur égale à la moitié de celle de la brique raidisseur.

Les opérations suivantes peuvent en outre être prévues :
- pose de briques de chaînage comprenant une languette pour permettre leur emboîtement dans les rainures d'autres briques, et une réserve centrale délimitant deux parois latérales et un fond ;
- pose d'une armature métallique dans la réserve ;
- comblement de la réserve au moyen de béton.

De même, on peut prévoir les opérations suivantes :
- pose de briques de chaînage comprenant une languette pour permettre leur emboîtement dans les rainures d'autres briques, et une réserve centrale délimitant deux parois latérales et un fond ;
- découpe des parois latérales ;
- pose d'une dalle reposant directement sur le fond des briques de chaînage.

D'autres objets et avantages de l'invention apparaîtront à la lumière de la description faite ci-après en référence aux dessins annexés dans lesquels :
- la figure 1 est une vue en perspective d'un premier type de brique en béton de chanvre ;
- la figure 2 est une vue de côté de la brique de la figure 1 ;
- la figure 3 est une vue de dessus de la brique de la figure 1 ;
- la figure 4 est une vue en perspective d'un deuxième type de brique en béton de chanvre ;
- la figure 5 est une vue de côté de la brique de la figure 4 ;
- la figure 6 est une vue de dessus de la brique de la figure 4 ;
- la figure 7 est une vue en perspective d'un troisième type de brique en béton de chanvre ;
- la figure 8 est une vue de côté de la brique de la figure 7 ;
- la figure 9 est une vue de dessus de la brique de la figure 7 ;
- la figure 10 est une vue en perspective d'un quatrième type de brique en béton de chanvre ;
- la figure 11 est une vue de côté de la brique de la figure 10 ;
- la figure 12 est une vue de dessus de la brique de la figure 10 ;
- les figures 13 à 19 sont des vues en perspective montrant différentes étapes successives de réalisation d'un édifice à partir des briques des figures 1 à 12 ;
- les figures 20 et 21 sont des vues en perspective montrant deux étapes successives de réalisation d'un mur d'angle à partir des briques des figures 1 à 9.

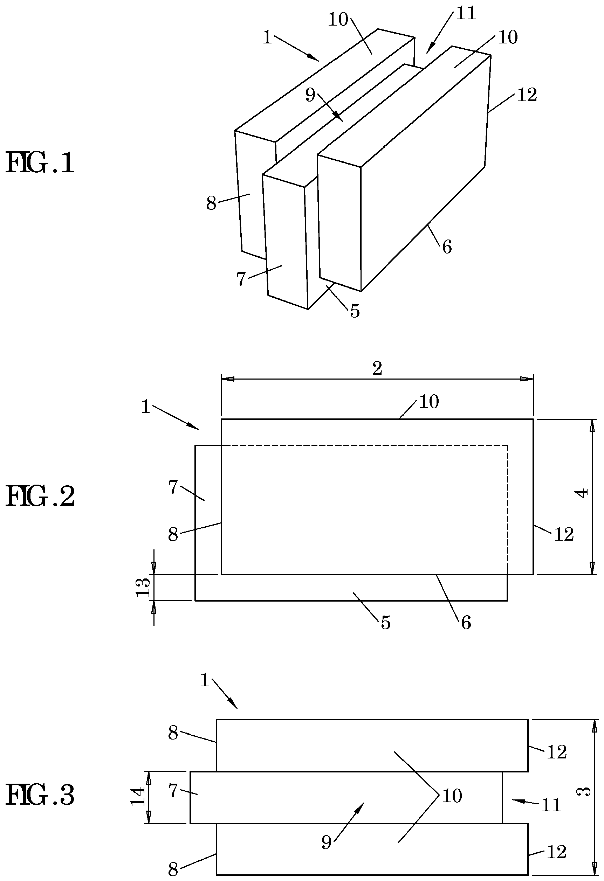

On a représenté sur les figures 1 à 12 quatre types différents de briques élémentaires préfabriquées en béton de chanvre. Le béton est préparé à partir de granulat de chanvre ou chènevotte, qui est la partie intérieure fragmentée de la tige de chanvre. La chènevotte utilisée répond aux recommandations des producteurs de chanvre pour l'utilisation dans la construction, cf. le fascicule Construire en Chanvre précité. La masse volumique de la chènevotte sèche employée est de l'ordre de 100 kg/m³ en foisonné (c'est-à-dire non tassé). Le liant employé peut comprendre de la chaux aérienne ou hydraulique (norme NF EN 459-1 à 3), éventuellement additionnée de pouzzolane (norme NF P 18-308), mais il est préférable en l'occurrence d'employer de la chaux aérienne pure. La composition comprend en outre du ciment prompt, et de l'eau de gâchage (répondant aux prescriptions de la norme NF EN 1008).

Les proportions volumiques de la composition préférée sont les suivantes : chènevotte 73% ; chaux aérienne 8% ; ciment prompt 4% ; eau 15%. Soit, pour 100 l (10kg) de chènevotte, environ 11 l de chaux aérienne, 5,5 l de ciment prompt et 20 l d'eau.

Après mélange et malaxage de la composition, on fabrique chaque type de brique par moulage sous pression (la pression est réalisée par tassement de la composition encore humide). Une fois moulée, chaque brique est démoulée puis subit un séchage à l'air pendant une durée de plusieurs semaines, ou en étuve pour un séchage accéléré.

Un premier type de brique **1** est illustré sur les figures 1 à 3. Cette brique **1,** dénommée brique de base, est pleine. Elle présente une longueur utile **2** de 600 mm, une largeur utile **3** de 300 mm et une hauteur utile **4** de 300 mm.

La brique de base **1** comprend :
- une languette inférieure **5** en saillie sur une face **6** inférieure ;
- une languette frontale **7** en saillie sur une face **8** avant.
- une rainure centrale **9** supérieure creusée dans une face supérieure **10** de la brique **1** et qui court sur toute la longueur de celle-ci, y compris sur la languette frontale **7 ;**
- une rainure arrière **11** creusée dans une face **12** arrière de la brique **1** et qui court sur toute la hauteur de celle-ci, y compris sur la languette inférieure **5.**

Les languettes **5, 7** présentent une hauteur **13** (en saillie) de 50 mm et une largeur **14** de 100 mm. Les rainures **9, 11** présentent une profondeur **13** de 50 mm et une largeur **14** de 100 mm.

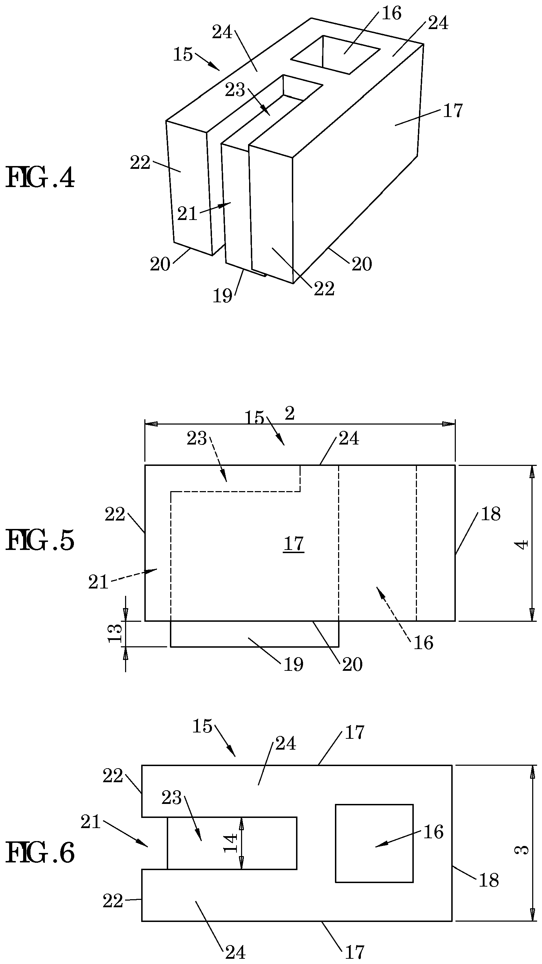

Un deuxième type de brique **15** est illustré sur les figures 4 à 6. Cette brique **15,** dénommée raidisseur, est alvéolée. Comme la brique de base **1,** elle présente une longueur utile **2** de 600 mm, une largeur utile **3** de 300 mm et une hauteur utile **4** de 300 mm.

Le raidisseur **15** comprend un alvéole **16** à section carrée percé sur toute sa hauteur, dont les côtés mesurent 150 mm et sont espacés de faces latérales **17** et arrière **18** du raidisseur **15** de 75 mm.

Le raidisseur **15** comprend :
- Une languette inférieure **19** en saillie sur une face inférieure **20,** qui s'interrompt à la limite de l'alvéole **16** (cf. figure 5) ;
- Une rainure frontale **21** creusée dans une face avant **22,** qui court sur toute la hauteur de la brique **15,** y compris sur la languette inférieure **19 ;**
- Une rainure centrale supérieure **23** creusée dans une face supérieure **24** de la brique **15** et qui s'étend vers l'avant jusqu'à la rainure frontale **21** et s'interrompt vers l'arrière à une distance de l'alvéole **16** de 75 mm.

La languette inférieure **19** présente une hauteur **13** en saillie de 50 mm et une largeur **14** de 100 mm ; les rainures **21, 23** présentent une profondeur **13** de 50 mm et une largeur **14** de 100 mm.

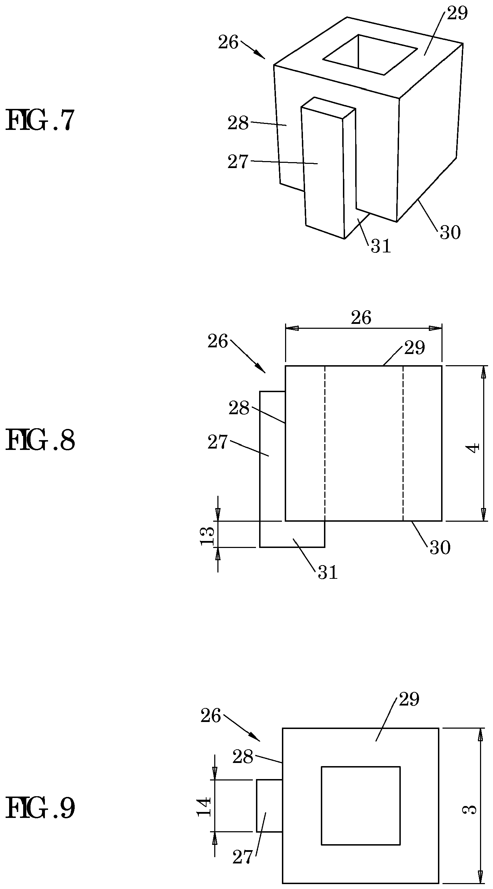

Un troisième type de brique **25** est illustré sur les figures 7 à 9. Cette brique **25,** dénommée demi-raidisseur, est alvéolée. De forme générale cubique, elle présente une longueur **26,** une largeur **3** et une hauteur **4** utiles égales, de 300 mm. Ainsi la longueur utile **26** du demi-raidisseur **25** est égale à la moitié de la longueur utile **2** de la brique de base **1** et du raidisseur **15.** Le demi-raidisseur **25** comprend un alvéole **16** à section carrée percé sur toute sa hauteur, dont les côtés mesurent 150 mm et sont espacés des quatre faces latérales du demi-raidisseur **25** d'une égale distance, de 75 mm. Le demi-raidisseur **25** comprend :
- une languette frontale **27** en saillie sur une face avant **28,** qui s'interrompt vers le haut à une distance de 50 mm d'une face supérieure **29** de la brique **25,** et se prolonge vers le bas au-delà d'une face inférieure **30** de la brique **25** sur une distance de 50 mm ;
- une languette inférieure centrale **31,** qui fait saillie sur la face inférieure **30** de la brique **25,** s'interrompt vers l'arrière à la limite de l'alvéole **16,** et se prolonge vers l'avant au-delà de la face avant **28** pour former avec la languette frontale **27** un bloc à profil en L.

Les languettes **27, 31** présentent une hauteur en saillie **13** de 50 mm et une largeur **14** de 100 mm.

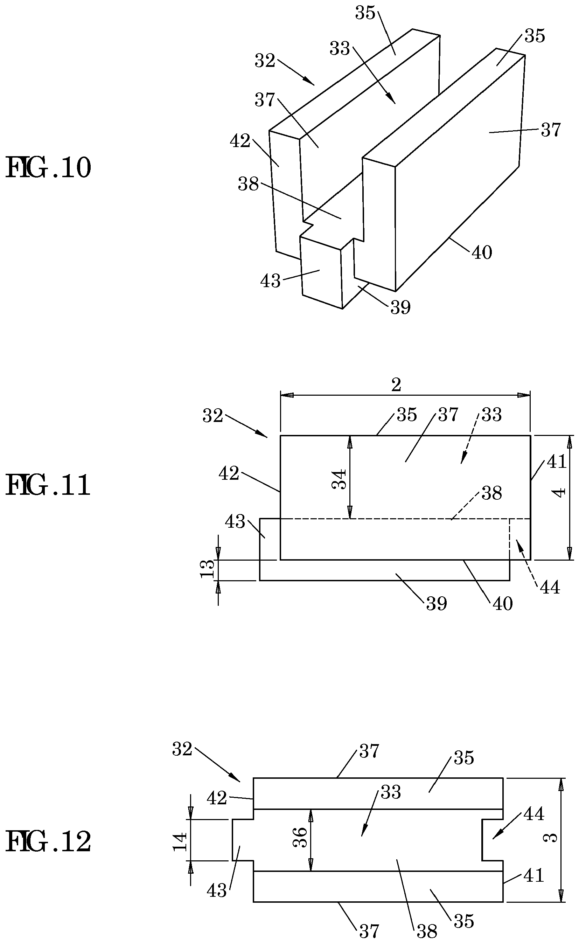

Un quatrième type de brique **32** est illustré sur les figures 10 à 12. Cette brique **32,** dénommée brique de chaînage, est creuse et possède en section transversale un profil en U. Elle présente une longueur utile **2,** de 600 mm, une largeur utile **3** de 300 mm et une hauteur utile **4** de 300 mm. Ces cotes sont identiques à celles de la brique de base **1** et à celles du raidisseur **15.**

La brique de chaînage **32** comprend :
- une réserve centrale **33,** creusée sur toute la longueur de la brique **32,** sur une hauteur **34** de 200 mm à partir d'une face **35** supérieure, et sur une largeur **36** de 150 mm, la réserve centrale **33** délimitant ainsi deux parois latérales **37** de même épaisseur (de 75 mm) espacées de la largeur **36** de la réserve **33,** et un fond **38** d'une épaisseur de 100 mm ;
- une languette inférieure centrale **39,** qui fait saillie sur une face inférieure **40** de la brique, s'interrompt vers l'arrière à une distance de 50 mm d'une face arrière **41** de la brique **32,** et se prolonge vers l'avant au-delà d'une face avant **42** de la brique **32,** sur une distance de 50 mm ;
- une languette frontale **43** qui fait saillie de la face avant **42** de la brique **32** dans le prolongement de la languette inférieure **39** et s'interrompt vers le haut au niveau de la réserve centrale **33 ;**
- une rainure arrière **44** creusée dans le fond **38,** et qui s'étend sur la hauteur de la languette inférieure **39.**

Les languettes **39, 43** présentent une hauteur **13** en saillie de 50 mm et une largeur **14** de 100 mm.

Les quatre types de briques élémentaires préfabriquées qui viennent d'être décrits permettent de procéder à la réalisation de tout édifice de maçonnerie, et en particulier l'élévation de murs et cloisons.

A cet effet, les briques **1, 15, 25, 32** peuvent être combinées entre elles. Elles sont en effet conçues pour s'emboîter tant horizontalement que verticalement. Ainsi :
- la languette inférieure **5** de chaque brique base **1** peut s'emboîter dans la rainure supérieure **9** d'une autre brique de base **1,** dans la rainure supérieure **23** d'un raidisseur **15,** ou dans la réserve **33** d'une brique de chaînage **32** (la différence de largeur pouvant être comblée au béton) ;
- la languette frontale **7** de chaque brique de base **1** peut s'emboîter dans la rainure arrière **11** d'une autre brique de base **1,** dans la rainure frontale **21** d'un raidisseur **15** ou dans la rainure arrière **44** d'une brique de chaînage **32 ;**
- la languette inférieure **19** d'un raidisseur **15** peut s'emboîter dans la rainure **9** supérieure d'une brique de base **1,** dans la rainure supérieure **23** d'un autre raidisseur **15,** ou dans la réserve **33** d'une brique de chaînage **32** (la différence de largeur pouvant être comblée au béton) ;
- la languette inférieure **31** d'un demi-raidisseur **25** peut s'emboîter dans la rainure supérieure **9** d'une brique de base **1,** dans la rainure supérieure **23** d'un autre raidisseur **15,** ou dans la réserve **33** d'une brique de chaînage **32** (la différence de largeur pouvant être comblée au béton)
- la languette frontale **27** d'un demi-raidisseur **25** peut s'emboîter dans la rainure arrière **11** d'une brique de base **1,** dans la rainure frontale **21** d'un raidisseur **15** ou dans la rainure arrière **44** d'une brique de chaînage **32 ;**
- la languette inférieure **39** d'une brique de chaînage **32** peut s'emboîter dans la rainure supérieure **9** d'une brique de base **1,** dans la rainure supérieure **23** d'un raidisseur **15** ou dans la réserve **33** d'une autre brique de chaînage **32** (la différence de largeur pouvant être comblée au béton, comme nous l'illustrerons ci-après) ;
- la languette frontale **43** d'une brique de chaînage **32** peut s'emboîter dans la rainure arrière **44** d'une autre brique de chaînage **32,** dans la rainure arrière **11** d'une brique de base **1,** ou dans la rainure frontale **21** d'un raidisseur **15.**

Comme nous le verrons ci-après, ces emboîtements peuvent être réalisés à joints secs (c'est-à-dire sans mortier de jointoiement), sans nuire à la stabilité de l'édifice que l'on souhaite réaliser, grâce aux rapports dimensionnels entre les cotes (hauteur et largeur) des rainures et languettes, et celles, utiles, des briques.

Ainsi, le rapport entre la largeur **14** des languettes **5, 7, 19, 27, 31, 39, 43** (égale à celle des rainures **9, 10, 21, 23, 44**) et la largeur 3 utile des briques **1, 15, 25, 32** est de préférence compris entre 1/4 et 1/2. Un rapport de 1/3 environ, qui correspond aux cotes fournies ci-dessus, représente un bon compromis entre, d'une part, une bonne résistance des languettes **5, 7, 19, 27, 31, 39, 43** au cisaillement, garante d'une bonne résistance des murs aux efforts dans la direction orthogonale (notamment vents et forces d'appui), et, d'autre part, une surface d'appui suffisante des briques **1, 15, 25, 32** les unes sur les autres, de part et d'autre des languettes **5, 7, 19, 27, 31, 39, 43,** garante d'une bonne stabilité des murs.

Par ailleurs, le rapport entre la hauteur des languettes 5, **7, 19, 27, 31, 39, 43** (égale à la profondeur des rainures **9, 10, 21, 23, 44**) et la hauteur utile (ou la largeur utile, égale à la hauteur utile) des briques **1, 15, 25, 32** est de préférence compris entre 1/10 et 1/4. Un rapport de 1/6 environ, qui correspond aux cotes fournies ci-dessus, représente un bon compromis entre, d'une part, une certaine facilité de montage, et la nécessité de maximiser les surfaces de contact entre les briques **1, 15, 25, 32** (c'est-à-dire le frottement entre elles), de manière à rigidifier l'édifice.

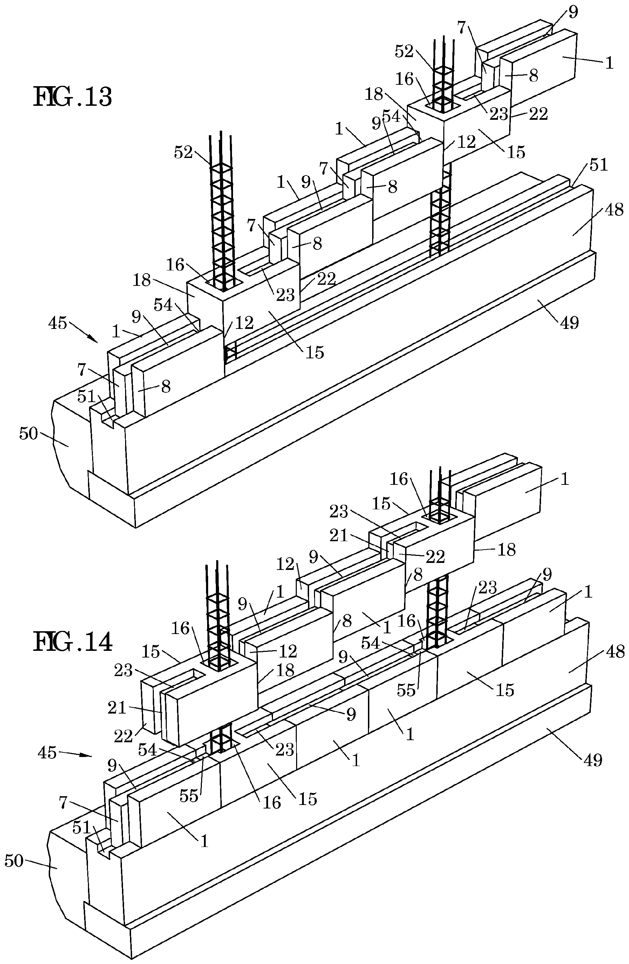

On a représenté sur les figures 13 à 19 différentes étapes successives de la construction d'un édifice comprenant un mur **45** droit, muni d'une ouverture **46** (il s'agit en l'occurrence d'une fenêtre) et surmonté d'une dalle **47.**

Le mur **45** est bâti sur un soubassement **48** (formant dalle de compression) réalisé en mortier de ciment hydrofugé, lui-même coulé sur une fondation **49** en béton située sous le niveau du sol tel que défini par un terrain extérieur **50** fini (c'est-à-dire damé). Comme cela est visible sur la figure 13, le soubassement **48** est partiellement enfoui dans le terrain **50,** et présente une portion supérieure en saillie dans laquelle est creusée une rainure **51** de largeur et profondeur égales respectivement à la largeur et à la profondeur des rainures des briques. Ainsi, en l'occurrence, la rainure **51** présente une largeur de 100 mm et une profondeur de 50 mm.

En prévision de la réalisation de l'ouverture **46** d'une part, et pour la consolidation du mur **45** d'autre part, deux armatures métalliques **52** à section carrée sont plantées verticalement dans le soubassement **48** pour la réalisation ultérieure de poteaux **53** de renfort, en étant espacées d'une valeur prédéterminée correspondant à trois longueurs de briques (soit 1800 mm), mesure faite sur l'axe central des armatures **52.** Les armatures **52** sont de préférence prépositionnées lors du coulage du soubassement **48,** de sorte à y être noyées, mais il est envisageable de réaliser d'abord le soubassement **48,** puis d'y forer ultérieurement des logements en fonction du positionnement souhaité des armatures **52,** dans l'hypothèse où ce positionnement ne serait pas connu lors du coulage du soubassement **48.**

Le mur **45** est alors élevé par empilage successif de rangées de briques emboîtées les unes dans les autres tant horizontalement que verticalement. On a illustré sur la figure 13 la pose d'une première rangée de briques dont les languettes inférieures sont emboîtées dans la rainure **51** du soubassement **48.** Cette première rangée comprend une alternance de briques de base **1,** emboîtés dans le soubassement **48** aux endroits dépourvus d'armatures **52,** et de raidisseurs **15** emboîtés dans le soubassement **48** au niveau des armatures **52.** Plus précisément, comme cela est visible sur la figure 13, les raidisseurs **15** sont positionnés de manière que les armatures **52** s'étendent au travers de leurs alvéoles **16.** D'un point de vue pratique, dans le cas où les armatures **52** sont prépositionnées dans le soubassement **48,** les raidisseurs **15** sont simplement enfilés par le haut sur les armatures **52,** pour venir s'emboîter ensuite dans la rainure **51** du soubassement **48.**

Les briques de base **1** sont toutes orientées dans une même direction (leur face arrière **12** ici tournée vers l'arrière de la figure 13). Les raidisseurs **15** sont également orientés dans une même direction, mais à l'opposé des briques de base **1.** De la sorte, chaque raidisseur **15** est encadré par deux briques de base **1 :** une première dont la face arrière **12** est simplement plaquée contre la face arrière **18** du raidisseur **15,** et une seconde dont la languette frontale **7** est emboîtée dans la rainure frontale **21** du raidisseur **15.**

Cette première rangée est posée à sec, sans joint de mortier, par simple emboîtement des briques **1, 15** dans le soubassement **48.** Compte tenu des cotes identiques (de hauteur et de largeur) de la rainure **51** du soubassement **48** et des languettes **5, 7, 19** des briques **1, 15,** il n'existe pas de jeu fonctionnel entre la rainure **51** et les languettes **5, 7, 19.** Cette absence de jeu n'interdit toutefois pas l'emboîtement, en raison de la relative élasticité du matériau des briques **1, 15** (contrairement à un béton de ciment, par exemple, qui est extrêmement rigide).

Avant de poser la deuxième rangée de briques, on procède aux deux opérations suivantes :
- comblement, de préférence au béton de chanvre, d'un interstice **54** existant entre la face arrière **18** de chaque raidisseur **15** et la rainure arrière **11** de la brique de base 1 adjacente ;
- réalisation d'une découpe **55** dans la face supérieure **24** de chaque raidisseur **15,** du côté de sa face arrière **18,** pour prolonger la rainure supérieure **9** de la brique de base **1** adjacente jusqu'à l'alvéole **16** et permettre ainsi la pose sans encombre de la rangée supérieure de briques.

La deuxième rangée de briques peut alors être posée. Comme cela est visible sur la figure 14, les briques de cette deuxième rangée sont tournées à l'opposé des briques de la première rangée, de sorte à agencer les briques en quinconce d'une rangée à l'autre. Grâce à la découpe **55** réalisée dans la face supérieure **24** des raidisseurs **15** de la première rangée, chaque raidisseur **15** de la deuxième rangée peut s'emboîter sans obstacle, à cheval sur le raidisseur **15** de la première rangée et sur la brique de base **1** adjacente, du côté de sa face arrière **12.** De même que la première rangée, la deuxième rangée (et les suivantes) est posée à sec, sans joint de mortier, par simple emboîtement des briques de la deuxième rangée les unes dans les autres et dans les briques de la première rangée. Compte tenu des cotes identiques (de saillie et de largeur) des rainures et des languettes, il n'existe pas de jeu fonctionnel dans les emboîtements, ce qui ne gêne pas la pose en raison de la relative élasticité du béton de chanvre. L'absence de joint présente un triple avantage :
- le temps de pose se trouve considérablement réduit ;
- on économise une grande quantité de matière (eau, ciment, granulat), au bénéfice des coûts de l'édifice et de ses qualités environnementales ;
- le mur ainsi élevé présente peu ou pas de ponts thermiques, ses performances en matière d'isolation thermique et phonique s'en trouvant accrues.

Une fois la deuxième rangée de briques posée, on procède aux mêmes comblements et découpes dans les raidisseurs **15** de la deuxième rangée que ceux réalisés dans les raidisseurs **15** de la première rangée, afin de permettre la pose de la troisième rangée. La troisième rangée est alors posée, les briques de base **1** et les raidisseurs **15** étant orientés dans le même sens que celles de la première rangée (et donc à l'opposé de celles de la deuxième). De même que précédemment, l'emboîtement est simple, sans joint de mortier.

On peut alors combler les alvéoles **16** des raidisseurs **15** au moyen d'un béton de ciment, noyant ainsi les armatures **52** et formant des poteaux **53** armés qui rigidifient verticalement le mur **45** et constituent un encadrement pour la fenêtre **46.**

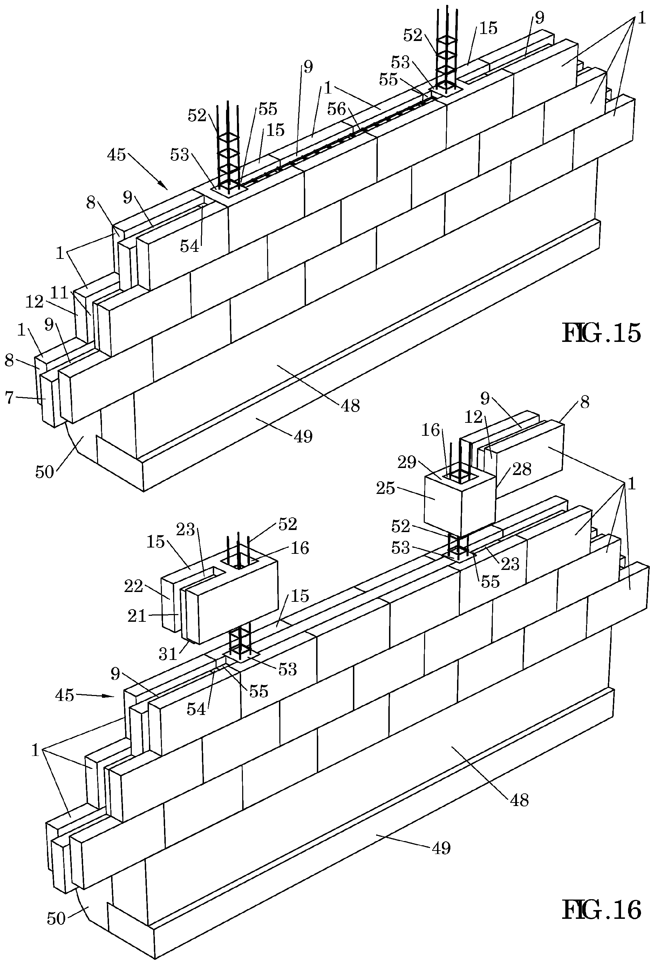

La troisième rangée délimitant un appui pour la fenêtre **46,** on ne dispose pas de briques de quatrième rangée entre les armatures **52.** En revanche, afin de rigidifier horizontalement l'encadrement de la fenêtre, on effectue les opérations suivantes :
- réalisation d'une découpe **55** dans la face supérieure **24** de chaque raidisseur **15,** pour prolonger de part et d'autre jusqu'aux alvéoles **16** la rainure supérieure **9, 23** des briques de la troisième rangée entre les armatures **52** (figure 15) ;
- pose dans cette rainure **9, 23** d'une armature **56** métallique horizontale qui s'étend d'une armature verticale **52** à l'autre (figure 15) ;
- remplissage de la rainure **9, 23** au moyen d'un béton de ciment pour noyer l'armature **56** horizontale et ainsi réaliser une poutre de renfort de l'appui de fenêtre (figure 16).

Afin de permettre l'emboîtement des raidisseurs **15** de la rangée suivante, on réalise comme précédemment des découpes **55** dans la face supérieure **24** de chaque raidisseur **15.** Puis on procède à la pose des briques de la rangée suivante (la quatrième dans l'exemple illustré). Comme cela est visible sur la figure 16, afin de conserver une élévation du mur **45** avec une répartition des briques en quinconce, on emboîte, sur le raidisseur **15** de la troisième rangée tourné à l'opposé de l'ouverture **46** un demi-raidisseur **25,** avec sa languette frontale **27** tournée à l'opposé de l'ouverture **46.** Une brique de base **1** vient ensuite s'emboîter horizontalement sur le demi-raidisseur **25.** Les raidisseurs **15** et demi-raidisseurs **25** de cette rangée et des suivantes forment ensemble un tableau pour la fenêtre **46** ainsi délimitée.

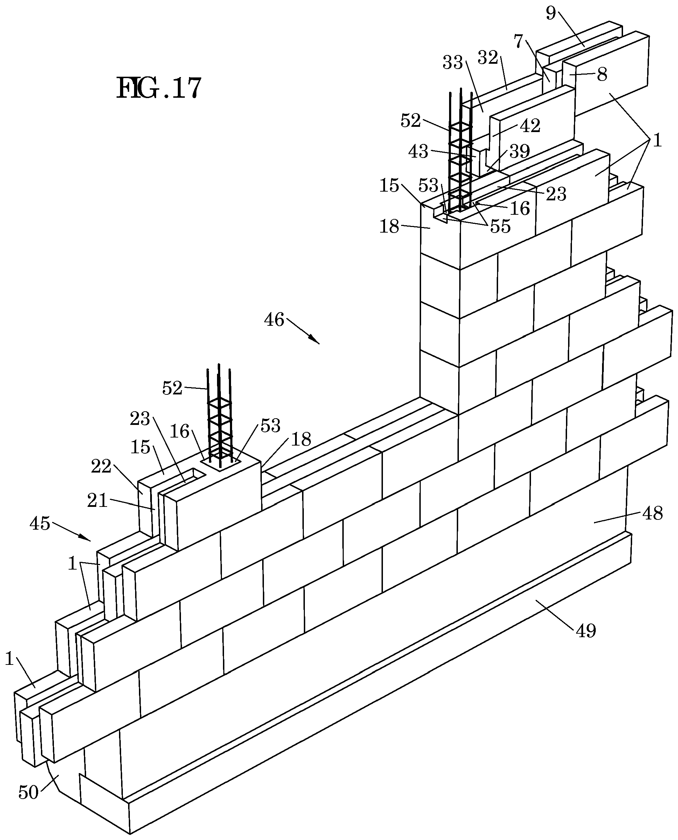

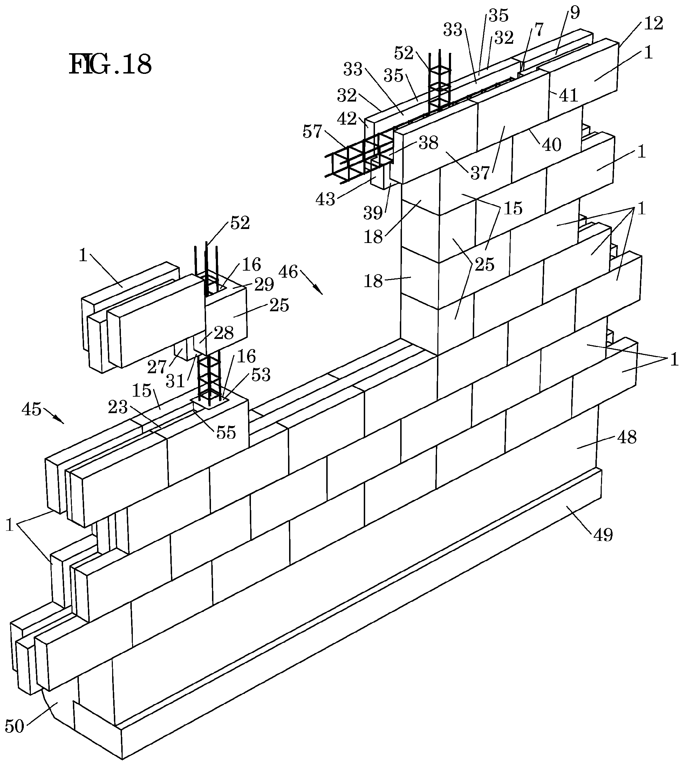

Comme cela est visible à droite sur la figure 17, et à gauche en éclaté sur la figure 18, on alterne raidisseurs **15** et demi-raidisseurs **25** dans chaque rangée successive pour monter le tableau de la fenêtre **46** en préservant la quinconce. On procède comme précédemment aux découpes des faces supérieures des raidisseurs **15** et demi-raidisseurs **25** pour permettre l'emboîtement de chaque rangée supérieure.

Une fois le tableau de la fenêtre **46** parvenu à la hauteur souhaitée (celle-ci correspond en l'occurrence à quatre rangées de briques, soit une hauteur de 1200 mm), on procède à la pose d'une rangée supplémentaire de briques de chaînage **32** qui participeront à la réalisation d'un linteau pour la fenêtre **46.**

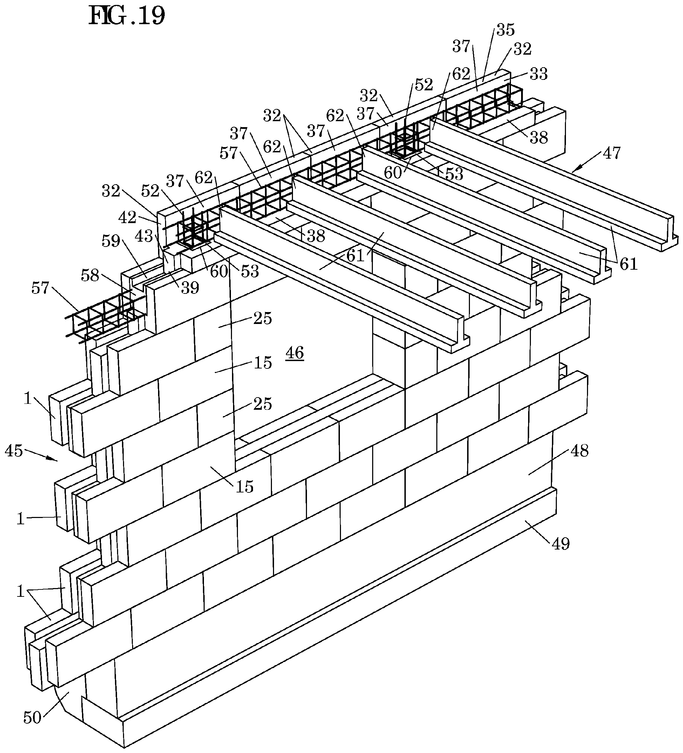

Comme cela est visible sur la figure 18, les briques de chaînage **32,** simplement emboîtées, verticalement dans la rainure **9, 27** des briques de la rangée inférieure, et horizontalement les unes dans les autres, sont rigidifiées horizontalement au moyen d'une armature métallique **57** couchée dans la réserve **33** centrale, laquelle est ensuite comblée au moyen d'un béton de ciment qui vient noyer l'armature **57** et ainsi constituer une poutre de linteau **58** pour la fenêtre **46.** Comme cela est visible sur la figure 19, la poutre de linteau **58** est toutefois creusée (par exemple au moyen d'un tasseau que l'on retire une fois achevée la prise du ciment) d'une rainure **59** aux dimensions (même profondeur, même largeur) des languettes **39,** afin de permettre l'emboîtement de la rangée supérieure (voir ci-après).

Afin de permettre le passage des armatures verticales **52,** le fond **38** des briques de chaînage **32** placées à l'aplomb du tableau de la fenêtre **46** sont par ailleurs découpées d'une ouverture **60** à section carrée, cette ouverture **60** étant comblée au moyen d'un béton de ciment pour compléter le poteau **53** de renfort vertical du mur **45** (et de la fenêtre **46**).

Comme illustré sur la figure 19, la rangée suivante est constituée de briques de chaînage **32** emboîtées verticalement dans les rainures **9** des briques de base **1** de la rangée précédente et dans la rainure **59** creusée dans la poutre de linteau **59.**

En outre, afin de permettre la pose de la dalle **47** reposant sur cette dernière rangée de briques **32,** on procède à une découpe (en l'occurrence un arasement complet) des parois latérales **37** sur un côté intérieur des briques de chaînage **32.** Comme cela est visible sur la figure 19, la dalle **47** comprend des poutrelles **61** profilées (par exemple à section transversale en T, comme illustré) dont une extrémité **62** est posée directement sur le fond **38** des briques de chaînage **32,** grâce à la découpe réalisée. Les poutrelles **61** ne s'étendent toutefois pas jusqu'aux parois latérales **37** opposées des briques de chaînage **32 :** elles en sont en effet écartées pour permettre la pose, entre les parois latérales **37** et les extrémités **62** des poutrelles, d'une armature métallique **57** de renfort de bordure de la dalle **47,** qui sera ultérieurement noyée dans un béton de ciment.

Comme cela est également visible sur la figure 19, les armatures métalliques **52** verticales s'étendent jusqu'à la dalle **47,** au travers d'ouvertures carrées **60** découpées dans les fonds **38** des briques de chaînage **32** situées à l'aplomb du tableau de la fenêtre **46** et comblées par un béton de ciment complétant les poteaux **53** verticaux de renfort.

La fixation ultérieure des huisseries (portes, fenêtres) est réalisée directement dans les poteaux, appuis, tableaux et linteaux des ouvertures. Pour y accéder, il suffit de réaliser dans les briques des mortaises pour permettre le passage des pattes de fixation des huisseries.

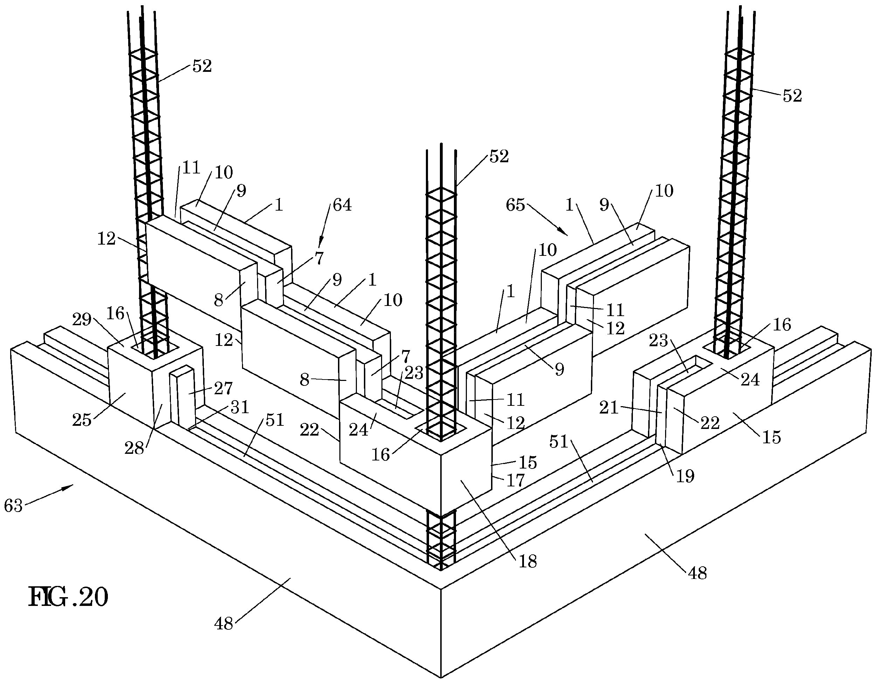

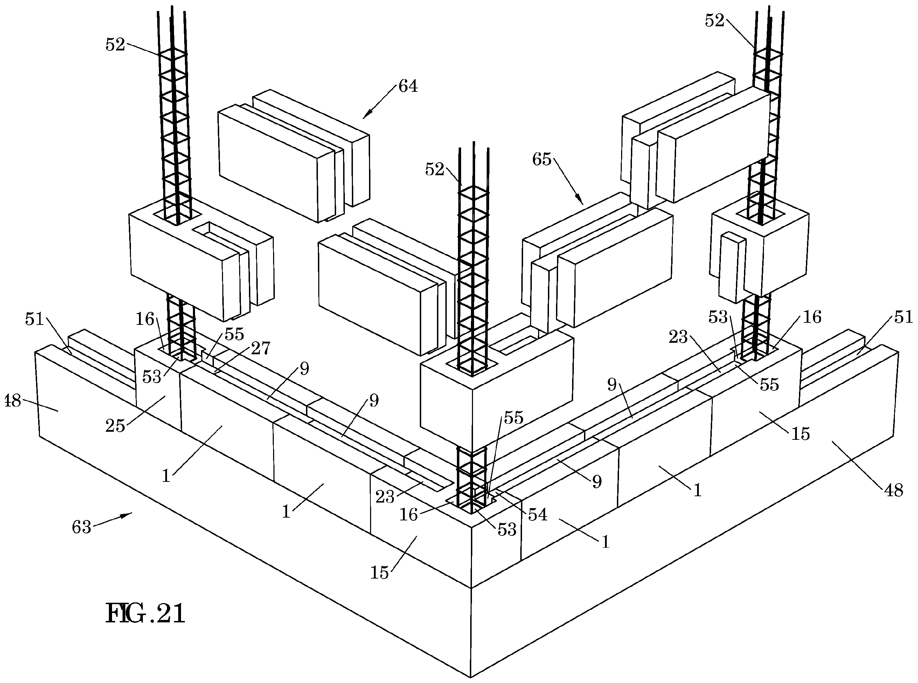

On a représenté sur les figures 20 et 21, à titre d'exemple illustratif, la réalisation d'un mur d'angle **63** au moyen de briques de base **1,** de raidisseurs **15** et de demi-raidisseurs **25.** Seules les poses d'une première et d'une deuxième rangée de briques sont illustrées, les rangées suivantes étant identiques en alternance aux deux premières rangées.

Comme précédemment décrit, le mur d'angle **63** repose sur un soubassement **48** muni d'une rainure **51** creusée sur une face supérieure, et coulé sur une fondation (non représentée) située sous le niveau du sol du terrain fini. Le mur **63** est composé de deux pans de mur **64, 65** (que l'on dénomme arbitrairement pan gauche **64** et pan droit **65,** en référence à l'orientation choisie pour la figure 20) formant un angle (droit en l'espèce), et comprend au moins un poteau d'angle **53** rigidifié par une armature métallique **52** plantée verticalement dans le soubassement **48.** Dans l'exemple illustré, deux autres armatures **52** sont plantées chacune dans un pan du soubassement **48,** à distances égales prédéterminées (1800 mm) de l'armature d'angle **52.**

La première rangée de briques comprend un premier raidisseur **15** emboîté sur le soubassement dans l'angle du mur **63,** avec l'armature métallique d'angle **52** enfilée dans l'alvéole **16** du raidisseur **15.** Ce premier raidisseur **15** peut être orienté indifféremment suivant l'un ou l'autre des pans de mur **64, 65.** Sur le dessin de la figure 20, on a arbitrairement choisi d'orienter le raidisseur **15** suivant le pan gauche **64.**

La première rangée de briques comprend en outre plusieurs (deux en l'espèce) briques de base **1,** emboîtées sur le soubassement **48** dans chaque pan. Dans le pan gauche **64,** où s'étend le raidisseur d'angle **15,** les briques de base **1** sont orientées en direction de l'angle, la languette frontale **7** de la brique de base **1** adjacente au raidisseur d'angle **15** venant s'emboîter dans la rainure frontale **21** de celui-ci. Comme cela est illustré, un demi-raidisseur **25** est emboîté sur le soubassement **48** au niveau de l'armature **52** du pan gauche **64,** qui est enfilée dans son alvéole **16.** Le demi-raidisseur **25** est orienté en direction de l'angle, de manière que sa languette frontale **27** vienne s'emboîter dans la rainure arrière **11** de la brique de base **1** adjacente.

Dans le pan droit **65,** les (deux) briques de base **1** sont orientées à l'opposé de l'angle, la face arrière **12** de la brique de base **1** adjacente au raidisseur d'angle **15** venant se plaquer à plat contre une face latérale **17** de celui-ci. Comme cela est par ailleurs illustré, un raidisseur **15** est emboîté sur le soubassement **48** au niveau de l'armature **52** du pan droit **65,** qui est enfilée dans son alvéole **16.** Le raidisseur **15** est orienté en direction de l'angle, de manière que la languette frontale **7** de la brique de base **1** adjacente vienne s'emboîter dans la rainure frontale **21** du raidisseur **15.**

Comme dans l'exemple décrit en référence aux figures 13 à 19, les briques sont simplement emboîtées dans le soubassement **48** et les unes dans les autres, aucun joint de mortier n'étant employé.

Une fois la première rangée posée, on procède aux deux opérations préparatoires suivantes en vue de la pose de la deuxième rangée :
- comblement, de préférence au béton de chanvre, de l'interstice **54** entre la face latérale **17** du raidisseur d'angle **15** et la rainure arrière **11** de la brique de base **1** adjacente du pan droit **65 ;**
- réalisation d'une découpe **55** dans la face supérieure **24** du raidisseur d'angle **15,** du côté de la brique de base **1** adjacente du pan droit **65,** pour prolonger la rainure supérieure **9** de la brique de base **1** jusqu'à l'alvéole **16** et permettre ainsi la pose sans encombre de la deuxième rangée de briques ;
- réalisation d'une découpe **55** dans la face supérieure **29** du demi-raidisseur **25** du pan gauche **64,** du côté de la brique de base **1** adjacente, pour prolonger la rainure supérieure **9** de la brique de base **1** jusqu'à l'alvéole **16** et permettre ainsi la pose sans encombre de la deuxième rangée de briques ;
- réalisation d'une découpe **55** dans la face supérieure **24** du raidisseur **15** du pan droit **65,** du côté de la brique de base **1** adjacente, pour prolonger la rainure supérieure **23** du raidisseur **15** jusqu'à l'alvéole **16** et permettre ainsi la pose sans encombre de la deuxième rangée de briques.

On peut alors poser les briques de la deuxième rangée, comme illustré sur la figure 21. Comme on peut le voir sur la figure, dans cette deuxième rangée les briques sont orientées à l'inverse de celles de la première rangée. Ainsi, la deuxième rangée comprend un raidisseur d'angle **15** décalé angulairement (en l'espèce à angle droit) par rapport au raidisseur d'angle **15** de la première rangée, et emboîté à cheval sur celui-ci et sur la brique de base **1** adjacente du pan droit **65.** Les briques de base **1** du pan droit **65** sont orientées en direction de l'angle du mur **63,** et un demi-raidisseur **25** est posé an niveau de l'armature **52** du pan droit **65,** également orienté en direction de l'angle, sa languette frontale **27** venant s'emboîter dans la rainure arrière **11** de la brique de base **1** adjacence.

De même, les briques de base **1** du pan gauche **64** de la deuxième rangée sont orientées à l'opposé de l'angle, et un raidisseur **15** est posé au niveau de l'armature **52** du pan gauche **64,** de manière que la languette frontale **7** de la brique de base **1** adjacente vienne s'emboîter dans la rainure frontale **21** du raidisseur **15.** Aucun joint de mortier n'est employé entre les briques. Comme on l'a représenté sur la figure 21, les alvéoles **16** des raidisseurs **15** et demi-raidisseurs **25** peuvent être comblés au béton de ciment avant la pose de la deuxième rangée. Ce comblement peut toutefois être réalisé ultérieurement, après la pose de la deuxième rangée ou même de rangées supérieures, pour former les poteaux verticaux **53** armés.

On voit bien que, quelle que soit la configuration de l'édifice à bâtir, l'utilisation des briques de chanvre décrites plus haut permet une construction facile et rapide, grâce notamment à l'absence de jointoiement qui permet une économie considérable de temps et de matériau. A titre d'exemple, la construction d'un pavillon traditionnel d'une surface au sol de 150 m², qui nécessite environ 1000 briques (au total) des différents types décrits, peut être achevée (hors finitions) en une semaine pour une personne seule sur le chantier, soit un gain de temps supérieur à 50% par rapport aux procédés connus, soit de maçonnerie ordinaire à base de moellons, soit de maçonnerie à base de chanvre banché sur ossature bois, soit de maçonnerie à base de blocs de béton de chanvre jointoyés et posés sur une ossature bois.

En employant une ossature en béton armé pour la réalisation des poteaux (qui peuvent en outre faire office d'encadrement des ouvertures) et des dalles, l'élévation, à partir des briques de chanvre décrits plus haut, d'un édifice de plusieurs étages, ne souffre d'aucune restriction, tandis que les règles professionnelles concernant les édifices en béton de chanvre réalisés de manière traditionnelle sur une ossature bois limitent la hauteur des édifices à deux niveaux (rez-de-chaussée surmonté d'un étage).

La combinaison des briques de base, pleines, et des briques raidisseurs, alvéolées, pour l'élévation des murs, limite le nombre de poteaux de renfort et évite de recourir à une ossature bois nécessitant l'intervention d'un charpentier spécialisé, cependant que la quantité de béton de ciment est limitée et les qualités environnementales de l'édifice préservées. Cependant il est parfaitement envisageable de remplacer les poteaux en béton armé par des piliers de bois ou par un béton de chaux non armé, de même qu'il est envisageable de remplacer les renforts d'appui et de linteau des ouvertures en béton armé par des poutres en bois ou par un béton de chaux non armé.

## Revendications

1. Procédé de construction d'un édifice à partir de briques (1, 15, 25, 32) munies de rainures et de languettes permettant leur emboîtement mutuel, l'emboîtement des briques (1, 15, 25, 32) étant réalisé à joints secs, les rainures et les languettes des briques présentent des cotes identiques, l'emboîtement des briques (1,15,25,32) étant réalisé sans jeu fonctionnel, le procédé étant **caractérisé en ce que** les briques sont préfabriquées dans un matériau comprenant des fibres végétales agglomérées au moyen d'un liant, et **en ce que** chaque languette de chaque brique présente une hauteur (13) dont le rapport à une hauteur utile (4) ou une largeur utile (3) de ladite brique est de 1/6 environ, et **en ce que** chaque languette de chaque brique présente une largeur dont le rapport à une largeur utile de ladite brique est de 1/3 environ.

2. Procédé selon la revendication 1, **caractérisé en ce qu'**il comprend la pose combinée de briques de base (1) pleines, munies d'une rainure (9, 11) et d'une languette (5, 7) mutuellement emboîtables, et de briques raidisseurs (15) alvéolées, munies d'une rainure (21, 23) et d'une languette (19) mutuellement emboîtables ainsi que d'un alvéole (16) pour le passage d'un poteau (53) de renfort.

3. Procédé selon la revendication 2, qui comprend les opérations suivantes :
- réalisation d'un soubassement (48) en mortier ;
- pose d'une série de poteaux (52, 53) dans le soubassement ;
- pose de briques raidisseurs (15) au niveau des poteaux (52, 53), avec insertion de ceux-ci dans les alvéoles (16) des briques raidisseurs (15) ;
- pose de briques de base (1) entre les briques raidisseurs (15).

4. Procédé selon la revendication 3, **caractérisé en ce que** chaque poteau (53) comprend une armature (52) métallique noyée dans du béton.

5. Procédé selon la revendication 3, qui comprend une opération de pose, au niveau d'un poteau (53) et par-dessus une brique raidisseur (15), d'une brique demi-raidisseur (25), munie d'une languette (31) pour permettre son emboîtement sur la brique raidisseur (15) et d'un alvéole (16) pour le passage du poteau (53), et présentant une longueur égale à la moitié de celle de la brique raidisseur (15).

6. Procédé selon l'une des revendications 3 à 5, qui comprend les opérations suivantes :
- pose de briques de chaînage (32) comprenant une languette (39) pour permettre leur emboîtement dans les rainures d'autres briques, et une réserve (33) centrale délimitant deux parois latérales (37) et un fond (38) ;
- pose d'une armature métallique (57) dans la réserve (33) ;
- comblement de la réserve (33) au moyen d'un béton.

7. Procédé selon l'une des revendications 3 à 6, qui comprend les opérations suivantes :
- pose de briques de chaînage (32) comprenant une languette (39) pour permettre leur emboîtement dans les rainures d'autres briques, et une réserve (33) centrale délimitant deux parois latérales (37) et un fond (38) ;
- découpe d'une paroi latérale (37) ;
- pose d'une dalle (47) reposant directement sur le fond (38) des briques de chaînage (32).

8. Procédé selon l'une des revendications 1 à 7, **caractérisé en ce que** le matériau dans lequel sont préfabriquées les briques est du béton de chanvre.

9. Procédé selon l'une des revendications 1 à 8, dans lequel les briques sont conçues pour s'emboîter mutuellement tant horizontalement que verticalement.

## Patentansprüche

1. Verfahren zur Errichtung eines Bauwerks aus Ziegeln (1, 15, 25, 32), die mit Nuten und Federn versehen sind, die deren gegenseitige Verschachtelung ermöglicht, wobei die Verschachtelung der Ziegel (1, 15, 25, 32) mit trockenen Fugenflanken erfolgt, die Nuten und Federn der Ziegel identische Maße aufweisen, die Verschachtelung der Ziegel (1, 15, 25, 32) ohne betriebliches Spiel durchgeführt wird, wobei das Verfahren **dadurch gekennzeichnet ist, dass** die Ziegel aus einem Material vorgefertigt sind, welches pflanzliche Fasern umfasst, die anhand eines Bindemittels agglomeriert werden, und dadurch, dass jede Feder eines jeden Ziegels eine Höhe (13) aufweist, deren Verhältnis zu einer Nutzhöhe (4) oder einer Nutzbreite (3) des besagten Ziegels etwa 1/6 beträgt, und dadurch, dass jede Feder eines jeden Ziegels eine Breite aufweist, deren Verhältnis zu einer Nutzbreite des besagten Ziegels etwa 1/3 beträgt.

2. Verfahren nach Anspruch 1, **dadurch gekennzeichnet, dass** es das kombinierte Setzen von vollen Basisziegeln (1) umfasst, die mit einer Nut (9, 11) und einer Feder (5, 7) versehen sind, die gegenseitig verschachtelt werden können, sowie von Poren-Versteifungsziegeln (15), die mit einer Nut (21, 23) und einer Feder (19) versehen sind, die gegenseitig verschachtelt werden können, sowie mit einer Alveole (16) zum Durchführen eines Verstärkungspfostens (53).

3. Verfahren nach Anspruch 2, welches die folgenden Vorgänge umfasst:
- Gestaltung eines Unterbaus (48) aus Mörtel;
- Setzen einer Reihe von Pfosten (52, 53) in den Unterbau;
- Setzen von Versteifungsziegeln (15) im Bereich der Pfosten (52, 53), mit dem Einführen derselben in die Alveolen (16) der Versteifungsziegel (15);
- Setzen von Basisziegeln (1) zwischen die Versteifungsziegel (15).

4. Verfahren nach Anspruch 3, **dadurch gekennzeichnet, dass** jeder Pfosten (53) eine Metallbewehrung (52) umfasst, die in Beton gegossen ist.

5. Verfahren nach Anspruch 3, das einen Setzvorgang eines Halbversteifungsziegels (25) im Bereich eines Pfostens (53) und über einen Versteifungsziegel (15) hinweg, umfasst, der mit einer Feder (31) versehen ist, um seine Verschachtelung auf dem Versteifungsziegel (15) zu ermöglichen, und mit einer Alveole (16) zum Durchführen des Pfostens (53), und eine Länge aufweisend, die gleich der Hälfte jener des Versteifungsziegels (15) ist.

6. Verfahren nach einem der Ansprüche 3 bis 5, das die folgenden Vorgänge umfasst:
- Setzen von Ringankerziegeln (32), eine Feder (39) umfassend, um deren Verschachtelung in den Nuten anderer Ziegel zu ermöglichen, sowie eine zentrale Ausnehmung (33), die zwei Seitenwände (37) und einen Boden (38) eingrenzt;
- Einlegen einer Metallbewehrung (57) in die Ausnehmung (33);
- Ausfüllen der Ausnehmung (33) mit einem Beton.

7. Verfahren nach einem der Ansprüche 3 bis 6, das die folgenden Vorgänge umfasst:
- Setzen von Ringankerziegeln (32), eine Feder (39) umfassend, um deren Verschachtelung in den Nuten anderer Ziegel zu ermöglichen, sowie eine zentrale Ausnehmung (33), die zwei Seitenwände (37) und einen Boden (38) eingrenzt;
- Ausschneiden einer Seitenwand (37);
- Setzen einer Bodenplatte (47), die direkt auf dem Boden (38) der Ringankerziegel (32) aufliegt.

8. Verfahren nach einem der Ansprüche 1 bis 7, **dadurch gekennzeichnet, dass** das Material, aus dem die Ziegel vorgefertigt sind, Hanfbeton ist.

9. Verfahren nach einem der Ansprüche 1 bis 8, wobei die Ziegel gefertigt sind, um von Hand sowohl horizontal, als auch vertikal verschachtelt zu werden.

## Claims

1. A method for constructing a building from bricks (1, 15, 25, 32) provided with grooves and tongues allowing their mutual interlocking, the interlocking of the bricks (1, 15, 25, 32) being made through dry joints, the grooves and the tongues of the bricks have identical dimensions, the interlocking of the bricks (1, 15, 25, 32) being made without operating clearance, the method being **characterized in that** the bricks are precast of a material comprising vegetable fibers agglomerated by means of a binder, and **in that** each tongue of each brick has a height (13) whose ratio to an effective height (4) or an effective width (3) of said brick is about 1/6, and **in that** each tongue of each brick has a width whose ratio to an effective width of said brick is about 1/3.

2. The method according to claim 1, **characterized in that** it comprises the combined laying of solid base bricks (1), provided with a groove (9, 11) and a tongue (5, 7) which can be mutually interlocked, and with honeycomb stiffening bricks (15), provided with a groove (21, 23) and a tongue (19) which can be mutually interlocked, as well as an alveole (16) for the passage of a reinforcing post (53).

3. The method according to claim 2, which comprises the following operations:
- making of a mortar base (48);
- placing a series of posts (52, 53) in the base;
- placing stiffening bricks (15) at the posts (52, 53), with insertion of said posts into the alveoli (16) of the stiffening bricks (15);
- placing base bricks (1) between the stiffening bricks (15).

4. The method according to claim 3, **characterized in that** each post (53) comprises a metal reinforcement (52) embedded in concrete.

5. The method according to claim 3, which comprises an operation for placing, at a post (53) and over a stiffening brick (15), a half-stiffening brick (25) provided with a tongue (31) in order to allow its interlocking on the stiffening brick (15) and with an alveole (16) for the passage of the post (53), and having a length half as long as the length of the stiffening brick (15).

6. The method according to any of claims 3 to 5, which comprises the following operations:
- placing chaining bricks (32) comprising a tongue (39) in order to allow their interlocking in the grooves of other bricks, and a central cavity (33) delimiting two lateral walls (37) and a bottom (38);
- placing a metal reinforcement (57) in the cavity (33);
- filling of the cavity (33) by means of a concrete.

7. The method according to any of claims 3 to 6, which comprises the following operations:
- placing chaining bricks (32) comprising a tongue (39), in order to allow their interlocking in the grooves of other bricks, and a central cavity (33) delimiting two lateral walls (37) and a bottom (38);
- cutting a lateral wall (37);
- placing a slab (47) lying directly on the bottom (38) of the chaining bricks (32).

8. The method according to any of claims 1 to 7, **characterized in that** the material wherein the bricks are precast is hemp concrete.

9. The method according to any of claims 1 to 8, wherein the bricks are designed to mutually interlock both horizontally and vertically.
